# EUROPEAN PATENT SPECIFICATION

(11) **EP 1 670 727 B1**
(45) Date of publication and mention of the grant of the patent: **08.08.2007**
(21) Application number: 04787548.9
(22) Date of filing: 29.09.2004
(51) Int. Cl.: C03B 9/195

(54) **A PRESS-AND-BLOW MACHINE FOR THE MANUFACTURE OF HOLLOW GLASSWARE**
PRESSBLASMASCHINE FÜR DIE HERSTELLUNG VON HOHLEN GLASWAREN
MACHINE A PRESSE-SOUFFLE POUR LA FABRICATION DE VERRE CREUX

(30) Priority: 03.10.2003 IT TO20030772
(43) Date of publication of application: 21.06.2006
(73) Proprietor: Olivotto Glass Technologies S.p.A., 10051 Avigliana (IT)
(72) Inventor: LUMARE, Wladimiro, I-10040 Caprie (IT); MOLETTO, Renato, I-10139 Torino (IT)
(74) Representative: Spandonari, Carlo
(86) International application number: PCT/IB2004/003195
(87) International publication number: WO 2005/033025

(56) References cited:
- US-A- 1 642 660
- US-A- 1 657 921
- US-A- 3 910 419

## Description

This invention concerns an improved press-and-blow machine used for manufacturing hollow-glass glassware such as tumblers, wine glasses, bulbs and the like.

In the art of glass manufacture, press-and-blow machines are known which comprise a rotating carousel carrying several blowing stations, each of which will receive a glass gob in the plastic state from an external delivery channel and will subject the glass gob to a pressing process by which the gob is moulded by a plunger into a hollow blank, known as 'parison', and will then subject the pareson to a blowing operation, whereby a multi-sector mould closes around the parison and air is blown into the parison in order to stretch it against the mould and give it the final shape of the glass article. As the carousel moves forward, the glass item gradually cools down, until it reaches the final station where it is transferred to a take-out system.

As a consequence, every station includes not only the equipment to press the gob but also the equipment to blow the parison and therefore, although the above machines give a high yield and a good quality of the finished article, they are quite expensive.

In order to reduce costs, press-and-blow machines have been developed where the gob is pressed away from the carousel and is then transferred to it by a motorized, alternating arm. The processing stations on the carousel in this case are simpler, because they only include the tools for blowing the parison, and, moreover, a lower number of stations are required on the carousel, e.g. only six stations, since the glass transferred to the carousel as parison is already partially cooled, whereby the costs of the machine are lower.

However, the carousel must be stepped if it is to receive the parison from the motorized arm during stops, and therefore the above machine gives a lower yield in comparison to a machine in which the carousel is provided with all the equipment for pressing and blowing the gob.

US 3,910,419 dicloses a machine for making bottles or similar containers from vitreous or plastic material, in which a plurality plungers or of rams and tongs cooperating with molds are connected to a turntable for movement with the latter about the axis thereof, a drive for moving the ram parallel to the turntable axis toward and away from the respective mold and the tongs between open and closed positions for holding neck molds and the other mold parts coaxially aligned. The drive for the rams comprises a first cam track arranged stationarily about the axis of the turntable and a roller follower for each ram to move the latter toward and away from the respective mold during movement of the followers along the first cam track and the drive for the tongs comprises a second cam track also arranged stationarily about the turntable axis and a roller follower for each tongs to move the latter between open and closed positions during movement of the roller followers of the tongs along the second cam track. In order to relieve the cam tracks and the followers from excessive strains, to reduce wear of these elements and to make the connection between the follower and the movable elements operated by the same as light as possible to reduce mass forces during fast operation of the machine, a servomotor is arranged between each of the followers and the element moved thereby. Each servomotor is controlled so that the main forces for moving these elements are provided by the respective servomotors.

The main object of this invention is to provide a press-and-blow machine for glass manufacture which is improved with respect to the known machine where the pressing operation is performed outside the carousel, so that the yield is increased and a better quality of the article is achieved, without substantial increase of the manufacturing cost of the machine.

The above and other objects and advantages, such as will appear below, are achieved by the press-and-blow machine having the features recited in claim 1, while the subordinate claims identify other advantageous though unessential features of the machine.

The invention will now be described in more detail with reference to a preferred but not exclusive embodiment, shown by way of example in the attached drawings, wherein:
Figure 1 is a top view of the press-and-blow machine according to the invention;
Figure 2 is a partial cross-section of the press-and-blow machine of Figure 1, made along line II-II;
Figure 3 shows an enlarged detail of Figure 2 in a first operating condition;
Figure 4 shows the section of Figure 3 in a second operative condition;
Figure 5 is a plan view of a detail of the machine of the invention, in the direction of section line V-V of Figure 4;
Figures 6 to 9 diagrammatically show a portion of the machine of the invention, in four consecutive operating steps.

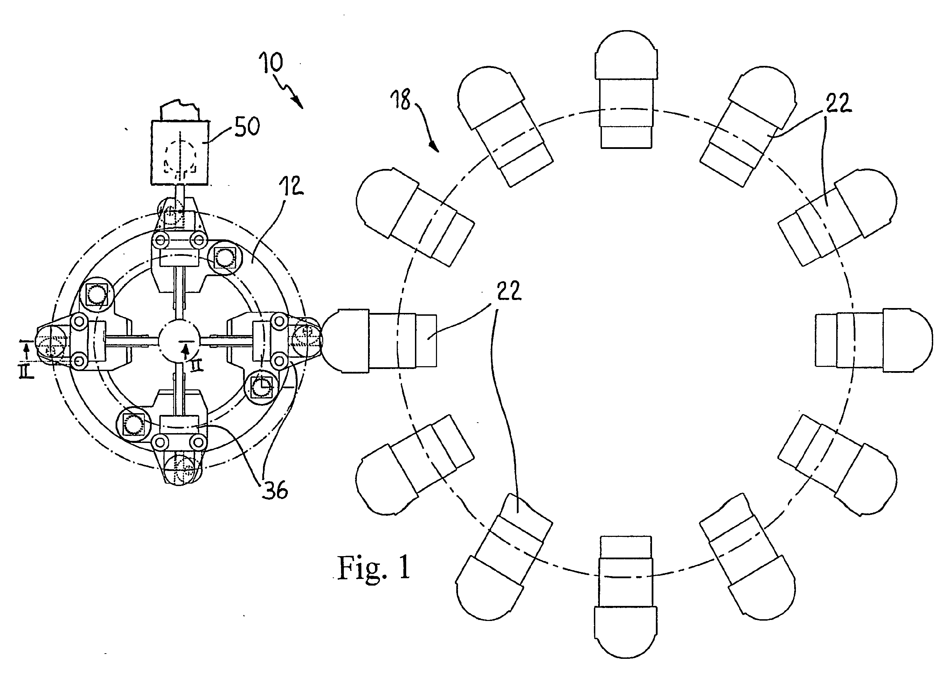

With initial reference to Figure 1, a press-and-blow machine 10 for the production of hollow glass articles includes a loader 12 arranged for receiving a malleable glass gob from a feeder known as 'delivery' 50, for pressing the gob into a blank having a primitive concave shape, knowsn as parison, and for transferring the parison to a blowing machine 18.

Blowing machine 18 consists of a rotating carousel which carries a plurality of blowing stations 22, for example twelve peripheral, equally spaced stations, each being able to receive a parison from loader 12 and to blow it in a mould, as known per se, so that it will take the shape of the finished article.

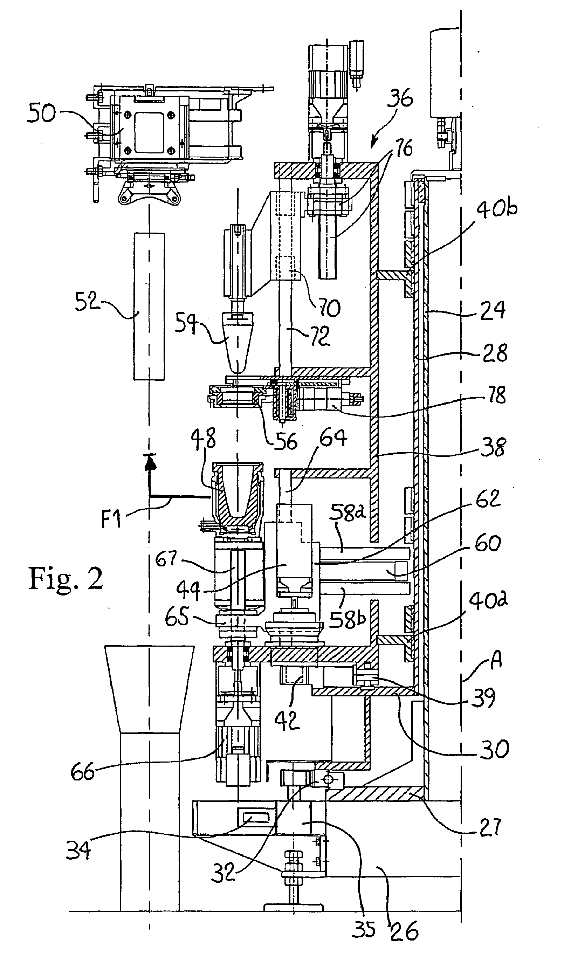

Figure 2 shows in detail the loader 12 which, according to the invention, comprises a column 24 rising from a basement 26 to which it is fastened by a flange 27. A cylinder 28 is freely journaled on column 24 and carries a plate 30 at its bottom end, the plate being rotatably supported upon flange 27 by means of rolling bearings 32. Plate 30 is integral with cylinder 28 and it driven to turn around axis A of column 24 by a motor 34 via a gear drive 35. Plate 30 carries four forming units 36, which are each carried on a frame 38 that is itself free to rotate on plate 30 around the axis of column 24 by means of rollers 39 and is rotatably supported on cylinder 28 by means of a couple of bushings 40a, 40b located on the cylinder near its opposite ends, each forming unit 36 being at a different height in order to avoid mutualal interference. Every forming unit 36 is moved independently in a relative rotation around plate 30 by a motor 44 by means of a pinion/rack driving group 42 and it includes:
- a blank-mould holder 48, movable both vertically and radially, and equipped for receiving a malleable glass gob from delivery 50 through a graphite pipe 52;
- a plunger 54, slidable vertically so that it will move coaxially into the blank-mould holder 48 when the latter is in a radially withdrawn position;
- a neck-ring 56, equipped to support the parison after the plunger pressing and movable radially.

Blank-mould holder 48 is supported by a couple of radial guides 58a, 58b, operated by a cylinder 60, and slidably supported by a slide 62, which is itself movable along a vertical guide 64 integral with frame 38. Slide 62 carries integrally a threaded bush 65 engaged by a screw 67 that is driven by a motor 66 to cause a vertical translation of slide 62.

Similarly, plunger 54 is integral with a slide 70 which is movable along a vertical guide 72, supported by frame 38 and moved by a motor 74 by means of a further screw-threaded bush transmission 76.

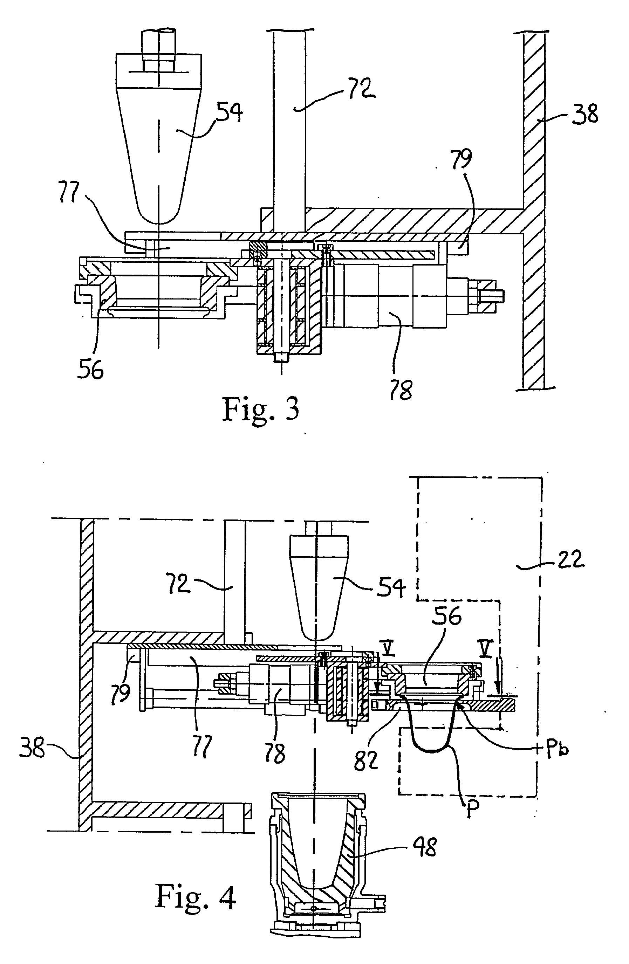

Neck-ring 56, shown in detail in Figure 3, comprises a couple of substantially semicircular, articulated grippers, which can be opened and closed by the action of a pneumatic cylinder 78. Neck-ring 56 is supported by a slide 77, slidable along a radial guide 79 and subjected to the action of a pneumatic cylinder (not shown) inside guide 79.

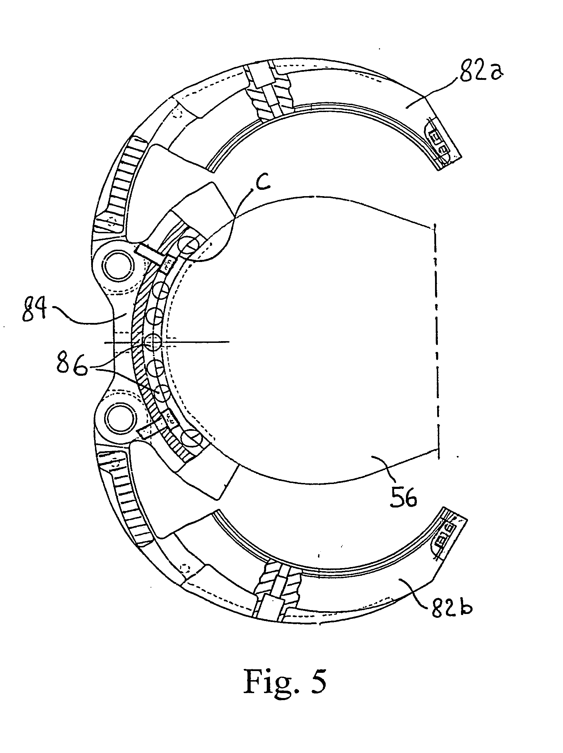

As shown in Figure 4, each blowing station 22 of carousel 20 is made for receiving a parison P from a neck-ring 56 and to this purpose it comprises a parison-receiving ring 82 consisting of a couple of grippers 82a, 82b (Figure 5), which are articulated to a stationary abutment 84 and positioned at a level slightly below the neck-ring, able to close to grasp the parison P by its edge Pb when it drops down by gravity from neck-ring 56, following the opening of its grippers. Stationary abutment 84 rotatably supports an array of stopping sleeves 86 having vertical axes and located along an arc of circumference C, so that neck-ring 56 will abut against the sleeves when it is outwardly extended to transfer parison P to carousel 20. More particularly, the neck-ring will abut against abutment sleeves 86 before the blowing station and the forming unit 36 become aligned, and subsequently neck-ring 56 will move back elastically while compressing the air in the pneumatic cylinder within guide 79 to balance the further approach of the two parts, whereby the neck-ring is maintained in a fixed position with respect to grippers 82a, 82b for a predetermined time length.

As reported before, carousel 20 is provided with known equipment (not shown) for blowing parison 82a, 82b. The equipment comprises a multi-sector mould enclosing the parison, and blowing heads arranged for spreading the parison against the walls of the mould to shape the desired article, while possibily imparting a relative rotation between the mould and the parison, whereby the latter will drag against the mould walls and will acquire an improved symmetry of rotation and a smoother surface finish, where the junction marks of the mould sectors are removed. This equipment is well known to a person skilled in the art and will not be further described.

The coordinated operation of the motors and actuators driving the machine is controlled by a control unit (not shown), which is not part of the scope of the present invention.

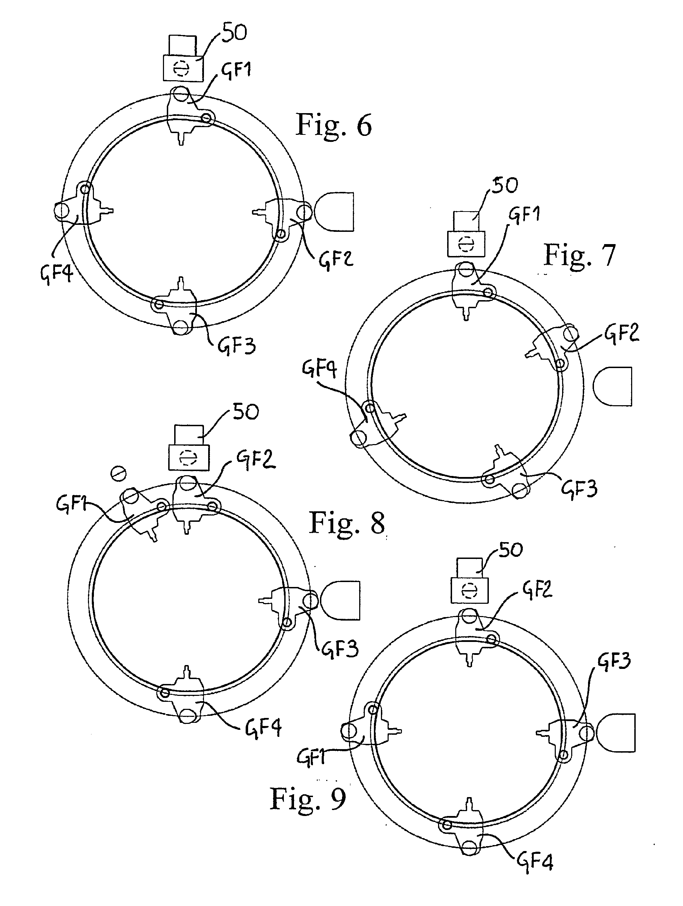

In the operation of machine 10, as diagrammatically shown in Figures 6-9, where the four forming units are referenced by reference numbers GF1, GF2, GF3, GF4, carousel 20 and plate 30 of the loader turn in opposite directions at a constant rate. In their inactive position, motors 44, which independently drive the pressing units, are stopped, whereby forming units GF1, GF2, GF3, GF4 rotate synchronously with their supporting plate 30. Therefore, cylinder 60 and motor 66 move blank-mould holder 48 below delivery 50, in preparation for delivery of the gob, as indicated by arrow F1 of Figure 1. As soon as blank-mould holder 48 of forming unit GF1 arrives exactly under delivery channel 50 (position of Figure 6) motor 44 of the respective forming unit rotates the latter at the same rate of plate 30, but in the opposite direction, in order to keep pressing unit GF1 in a fixed position with respect to a reference system integral with the delivery channel 50, while the remaining forming units GF2 to GF4 proceed in their independent motion (position of Figure 7). In this way, blank-mould holder 48 will stop under delivery channel 50 for a time sufficient for receiving the gob without the latter grazing the walls of the mould during the drop: such grazing might cause internal stresses and strains in the glass, which would negatively affect the quality of the product.

Once the gob has fallen into the blank-mould holder, the motor of the forming unit reverses its direction of rotation until forming unit 36 is back to its original position (Figures 8, 9), thereby leaving the area under the delivery 50 free for the next forming unit GF2. In the meantime, the blank-mould holder of forming unit GF1 withdraws to position itself under plunger 54, and the latter drops axially within the blank-mould holder to penetrate inside the glass gob (not shown) and to shape it into a parison P. Neck-ring 56, which surrounds plunger 54, will then engage edge Pb of the parison, cooling it. Subsequently, blank-mould holder 48 moves downward and the plunger goes upward, thereby leaving the parison hanging from neck-ring 56 by its edge Pb, while the lower portion of parison P, which is still viscous, is stretched by gravity.

A cylinder located inside guide 79 then brings neck-ring 56 to an outwardly extended position (Figure 4) until the neck-ring abuts against stationary abutment 84 of the respective blowing station on the carousel (Figure 5), even before being aligned by the stopping sleeves 86 to the station, grippers 82a, 82b being open to be able to receive the parison P. As mentioned above, a further approach of the neck-ring to the stationary abutment is balanced by the elastic return of the former. At this point, motor 44 of forming unit 36 again rotates the latter with respect to plate 30, so that neck-ring 56 will be held above grippers 82a, 82b for a time sufficient to allow the neck-ring grippers to open, grippers 82a, 82b to close, and the parison to drop and be intercepted by grippers 82a, 82b, which are closed as a ring. Subsequently, motor 44 moves forming unit 36 back to its primitive position and then stops, while the unit starts again to rotate together with plate 30, and the cycle is repeated.

It should be noted that both the carousel and the loader carry out the operations of collecting the gob, pressing it, transferring the parison from the loader to the carousel and blowing it, while continuing to rotate at a constant rate, with a considerable increase of the yield compared to the known, stepped press-and-blow machine, although the bulk is substantially manintained unchanged the manufacturing costs are not substantially increased.

## Claims

1. A press-and-blow machine (10) for the manufacture of hollow glass articles, comprising a blowing machine (18), consisting of a carousel (20) rotatable at a first, uniform speed and carrying a plurality of blowing stations (22), each of which is arranged for receiving a hollow parison (P) having a mouth defined by an edge (Pb), from a loader (12) through a parison-receiving ring (82) for the blowing process in the mould, said loader (12) comprising a plurality of forming units (36) in spider arrangement around a vertical axis (A), each comprising
- a blank-mould holder (48), arranged to receive a glass gob in a plastic state from a delivery (50),
- a plunger (54) vertically movable by the action of vertically moving means to drop coaxially into the blank-mould holder (48), and to penetrate the gob whereby it is shaped into said hollow parison (P) with edge (Pb),
- a neck-ring (56) for holding the parison (P) by its edge (Pb) and for delivering it to said blowing machine (18), and
- driving means (42, 44) for transferring the forming unit (36) in cyclical rotation around said vertical axis (A) from a relative stop position with respect to the delivery (50), in which the blank-mould holder (48) is located below the delivery (50) to receive the gob, to a transfer zone, in which said neck-ring (56) synchronously follows the motion of said parison-receiving ring (82) for a predetermined length of time, at a higher level, so that the parison (P) is dropped into it by gravity,
**characterized in that** said forming units (36) are rotatably supported by a plate (30) rotatably driven around said axis (A) by a motor (34) at a second, uniform speed, higher than said first uniform speed, and **in that** said driving means comprise a motor (44) operable, while at said stop position, to rotate the respective forming unit (36) around the axis (A), at the same speed as the plate (30) and in an opposite direction, whereby the neck-ring (56) is maintained still with respect to the delivery (50).

2. The machine of claim 1, **characterized in that** said motor (44) is also operable, while at said transfer zone, for driving the respective forming unit (36) to rotate around the axis (A), in an opposite direction to the plate (30), whereby the neck-ring (56) will move, for a predetermined length of time, at the same peripheral speed as the parison-receiving ring (82).

3. The machine of claim 1 or 2, **characterized in that** the neck-ring (56) is supported by the forming unit by means of radially yielding elements, allowing a restricted radial motion of the neck-ring (56) to compensate for the approaching of the receiving ring (82) to the axis (A) along the transfer zone.

4. The machine of any of claims 1 to 3, **characterized in that** the neck-ring (56) is equipped with a pair of articulated grippers (56a, 56b) having a substantially semicircular shape, arranged for supporting the parison (P) by its edge (Pb) and adapted to be opened, while in in said transfer zone, by the respective driving means to allow the parison (P) to be dropped by gravity into the parison-receiving ring (82).

5. The machine of any of claims 1 to 4, **characterized in that** each of said parison-receiving rings (82) comprises a pair of articulated grippers (82a, 82b) located slightly below the neck-ring (56) and closable to clamp the parison (P) by its edge (Pb) when the neck-ring (56) is allowed to drop from the neck-ring (56).

6. The machine of claim 5, **characterized in that** each of said blowing stations rotatably supports an array of vertically-mounted abutment sleeves (86), against which the neck-ring (56) is adapted to abut while in said transfer zone.

7. The machine of any of claims 1 to 6, **characterized in that** the neck-ring (56) is radially movable under the action of actuator means, whereby the neck-ring is movable from a withdrawn position where it is aligned with the plunger (54) to an outwardly extended position for transferring the parison to the carousel in said transfer zone.

8. The machine of any of claims 1 to 7, **characterized in that** said blank-mould holder (48) is radially movable under the action of radial driving means (60), whereby said blank-mould holder is movable from an outwardly extended position, where it is aligned with the delivery (50) to receive a gob, to a withdrawn position where it is aligned with the plunger.

9. The machine of any of claims 1 to 8, **characterized in that** said blank-mould holder (48) is vertically movable under the action of vertical driving means (66), whereby said blank-mould holder is movable from a raised forming position, where it receives the plunger (54) to mould the gob into a parison shape, to a lowered position where the parison is uncovered and suspended to the neck-ring (56) by its edge (Pb).

## Patentansprüche

1. Pressblasmaschine (10) für die Herstellung von hohlen Glasgegenständen, umfassend eine Blasmaschine (18) bestehend aus einem Karussell (20), das mit einer ersten, gleichmäßigen Geschwindigkeit drehbar ist und eine Vielzahl von Blasstationen (22) trägt, von denen jede angeordnet ist zum Aufnehmen eines hohlen Vorformlings (P) mit einem durch einen Rand (Pb) bestimmten Mund von einer Ladeeinrichtung (12) durch einen Vorformling-Aufnahmering (82) für den Blasprozess in der Form, wobei die Ladeeinrichtung (12) eine Vielzahl von spinnenförmig um eine vertikale Achse (A) angeordneten, formgebenden Einheiten (36) aufweist, von denen jede umfasst
- einen Vorformhalter (48), der zur Aufnahme eines in einem plastischen Zustand befindlichen Glasrohlings von einer Ausgabeeinrichtung (50) angeordnet ist,
- einen Kolben (54), der durch den Bewegungsablauf einer sich vertikal bewegenden Einrichtung vertikal bewegbar ist, um in den Vorformhalter (48) koaxial einzufallen und in den Rohling einzudringen, wodurch dieser zu dem hohlförmigen Vorformling (P) mit dem Rand (Pb) geformt wird,
- einen Halsring (56) zum Halten des Vorformlings (P) an seinem Rand (Pb) und zum Zuführen desselben zur Blasmaschine (18), und
- eine Antriebseinrichtung (42, 44), um die formgebende Einheit (36) in eine zyklische Drehung um die vertikale Achse (A) aus einer relativen Stillstandsposition bezüglich der Ausgabeeinrichtung (50), in der der Vorformhalter (48) sich unterhalb der Ausgabeeinrichtung (50) zum Aufnehmen des Rohlings befindet, in einen Transferbereich zu versetzen, in dem der Halsring (56) synchron der Bewegung des Vorformling-Aufnahmerings (82) für eine vorbestimmte Zeitspanne auf einem höheren Niveau folgt, so dass der Vorformling (P) auf Grund der Schwerkraft in diesen einfällt,
**dadurch gekennzeichnet, dass** die formgebenden Einheiten (36) durch eine Platte (30) drehbar gelagert sind, die von einem Motor (34) um die Achse (A) mit einer zweiten gleichförmigen Geschwindigkeit, die größer als die erste gleichförmige Geschwindigkeit ist, drehbar angetrieben wird, und dass die Antriebseinrichtung einen Motor (44) aufweist, der betreibbar ist, so dass die entsprechende formgebende Einheit (36), während diese sich in der Stillstandsposition befindet, um die Achse (A) mit der gleichen Geschwindigkeit wie die Platte (30) und in einer entgegengesetzten Richtung dreht, wodurch der Halsring (56) in Bezug auf die Ausgabeeinrichtung (50) ortsfest gehalten wird.

2. Maschine nach Anspruch 1, **dadurch gekennzeichnet, dass** der Motor (44) ebenso betreibbar ist, so dass die entsprechende formgebende Einheit (36) angetrieben wird, während diese sich in dem Übergangsbereich befindet, um diese um die Achse (A) in einer entgegengesetzten Richtung zu der Platte (30) zu drehen, wodurch der Halsring (56) für eine vorbestimmte Zeitspanne sich mit der gleichen Umfangsgeschwindigkeit wie der Vorformling-Aufnahmering (82) bewegt.

3. Maschine nach Anspruch 1 oder 2, **dadurch gekennzeichnet, dass** der Halsring (56) durch die formgebende Einheit mit Hilfe von in radialer Richtung nachgiebigen Elementen gelagert ist, die eine eingeschränkte radiale Bewegung des Halsrings (56) gestatten, um die Annäherung des Aufnahmerings (82) an die Achse (A) entlang des Übergangsbereichs auszugleichen.

4. Maschine nach einem der Ansprüche 1 bis 3, **dadurch gekennzeichnet, dass** der Halsring (56) mit einem Paar gelenkiger Greifer (56a, 56b) mit einer im Wesentlichen halbkreisförmigen Form ausgestattet ist, die zum Halten des Vorformlings (P) an seinem Rand (Pb) angeordnet und dafür ausgebildet sind, dass sie durch die entsprechende Antriebseinrichtung geöffnet werden, während sie sich in dem Übergangsbereich befinden, um das Einfallen des Vorformlings (P) in den Vorformling-Aufnahmering (82) durch die Schwerkraft zu ermöglichen.

5. Maschine nach einem der Ansprüche 1 bis 4, **dadurch gekennzeichnet, dass** jeder der Vorformling-Aufnahmeringe (82) ein Paar gelenkiger Greifer (82a, 82b) aufweist, die geringfügig unterhalb des Kreisrings (56) angeordnet sind und schließbar sind, um den Vorformling (P) an seinem Rand (Pb) zu klemmen, wenn der Halsring (56) von dem Halsring (56) herunterfallen kann.

6. Maschine nach Anspruch 5, **dadurch gekennzeichnet, dass** jede der Blasstationen eine Anordnung vertikal angebrachter Widerlagerhülsen (86) drehbar lagert, gegen die der Halsring (56) anstößt, wenn er sich in dem Übergangsbereich befindet.

7. Maschine nach einem der Ansprüche 1 bis 6, **dadurch gekennzeichnet, dass** der Halsring (56) unter der Wirkung der Betätigungseinrichtung radial bewegbar ist, wodurch der Halsring von einer Entnahmeposition, in der er mit dem Kolben (54) ausgerichtet ist, in eine nach außen verlagerte Position zum Überführen des Vorformlings zu dem Karussell in dem Übergangsbereich bewegbar ist.

8. Maschine nach einem der Ansprüche 1 bis 7, **dadurch gekennzeichnet, dass** der Vorformhalter (48) unter der Wirkung der radialen Antriebseinrichtung (60) radial bewegbar ist, wodurch der Vorformhalter von einer nach außen verlagerten Position, in der er mit der Ausgabeeinrichtung (50) zur Aufnahme eines Rohlings ausgerichtet ist, in eine Entnahmeposition, in der er mit dem Kolben ausgerichtet ist, bewegbar ist.

9. Maschine nach einem der Ansprüche 1 bis 8, **dadurch gekennzeichnet, dass** der Vorformhalter (48) unter der Wirkung der vertikalen Antriebseinrichtung (66) vertikal bewegbar ist, wodurch der Vorformhalter von einer angehobenen formgebenden Position, in der er den Kolben (54) aufnimmt, um dem Rohling die Form des Vorformlings zu verleihen, in eine abgesenkte Position bewegbar ist, in der der Vorformling freigelegt ist und von dem Halsring (56) an seinem Rand (Pb) herunterhängt.

## Revendications

1. Machine à pressé-soufflé (10) pour la fabrication d'articles en verre creux, comprenant une machine de soufflage (18) composée d'un carrousel (20) pouvant tourner à une première vitesse uniforme et supportant une pluralité de stations de soufflage (22), chacune étant agencée de manière à recevoir une paraison creuse (P) ayant une bouche définie par un bord (Pb), à partir d'une chargeuse (12) par le biais d'une bague de réception de paraison (82) pour la procédure de soufflage dans le moule, ladite chargeuse (12) comprenant une pluralité d'unités de formage (36) agencées en étoile autour d'un axe vertical (A), chacune comprenant :
- un porte-moule ébaucheur (48), agencé pour recevoir une goutte de verre dans un état plastique depuis un dispositif d'approvisionnement (50),
- un poinçon-ébaucheur (54) se déplaçant verticalement sous l'action d'un moyen de déplacement vertical pour tomber de manière coaxiale dans le porte-moule ébaucheur (48), et pénétrer la goutte pour qu'elle soit façonnée dans ladite paraison creuse (P) avec le bord (Pb),
- une bague de col (56) permettant de maintenir la paraison (P) par son bord (Pb) et la fournir à ladite machine de soufflage (18), et
- des moyens d'entraînement (42, 44) permettant de transférer l'unité de formage (36) par une rotation cyclique autour dudit axe vertical (A) d'une position d'arrêt relative par rapport au dispositif d'approvisionnement (50), dans laquelle le porte-moule ébaucheur (48) est situé en dessous du dispositif d'approvisionnement (50) pour recevoir la goutte, à une zone de transfert, dans laquelle ladite bague de col (56) suit de manière synchrone le mouvement de ladite bague de réception de paraison (82) pendant une période prédéterminée, à un niveau supérieur, de telle sorte que la paraison (P) y tombe par gravité,
**caractérisée en ce que** lesdites unités de formage (36) sont supportées de manière rotative par une plaque (30) entraînée en rotation autour dudit axe (A) par un moteur (34) à une deuxième vitesse uniforme supérieure à ladite première vitesse uniforme, et **en ce que** lesdits moyens d'entraînement comprennent un moteur (44) pouvant, alors qu'il se trouve dans ladite position d'arrêt, faire tourner l'unité de formage respective (36) autour de l'axe (A), à la même vitesse que la plaque (30) et dans un sens opposé, grâce à quoi la bague de col (56) est maintenue immobile par rapport au dispositif d'approvisionnement (50).

2. Machine selon la revendication 1, **caractérisée en ce que** ledit moteur (44) sert également, tout en étant au niveau de ladite zone de transfert, à entraîner l'unité de formage respective (36) pour qu'elle tourne autour de l'axe (A), dans une direction opposée à la plaque (30), grâce à quoi la bague de col (56) va se déplacer, pendant une période prédéterminée, à la même vitesse périphérique que la bague de réception de paraison (82).

3. Machine selon la revendication 1 ou 2, **caractérisée en ce que** la bague de col (56) est supporté par l'unité de formage au moyen d'éléments coulissant dans le sens radial, ce qui permet un mouvement radial restreint de la bague de col (56) pour compenser le rapprochement de la bague de réception (82) de l'axe (A) le long de la zone de transfert.

4. Machine selon l'une quelconque des revendications 1 à 3, **caractérisée en ce que** la bague de col (56) est équipée d'une paire de pinces articulées (56a, 56b) ayant une forme sensiblement semi-circulaire, agencées pour supporter la paraison (P) par son bord (Pb) et conçues pour être ouvertes, alors qu'elles se trouvent dans ladite zone de transfert, par les moyens d'entraînement respectifs pour permettre à la paraison (P) de tomber par gravité dans la bague de réception de paraison (82).

5. Machine selon l'une quelconque des revendications 1 à 4, **caractérisée en ce que** chacune des bagues de réception de paraison (82) comprend une paire de pinces articulées (82a, 82b) situées légèrement en dessous de la bague de col (56) et pouvant se fermer pour fixer la paraison (P) par son bord (Pb) lorsque la bague de col (56) est autorisée à tomber depuis la bague de col (56).

6. Machine selon la revendication 5, **caractérisée en ce que** chacune desdites stations de soufflage supporte de manière rotative un ensemble de manchons de butée montés verticalement (86), contre lesquels la bague de col (56) peut buter tandis qu'elle se trouve dans ladite zone de transfert.

7. Machine selon l'une quelconque des revendications 1 à 6, **caractérisée en ce que** la bague de col (56) peut se déplacer dans le sens radial sous l'action de moyens d'actionnement, la bague de col pouvant se déplacer d'une position retirée lorsqu'elle est alignée avec le poinçon-ébaucheur (54) à une position étendue vers l'extérieur pour permettre le transfert de la paraison au carrousel dans ladite zone de transfert.

8. Machine selon l'une quelconque des revendications 1 à 7, **caractérisée en ce que** ledit porte-moule ébaucheur (48) peut se déplacer dans le sens radial sous l'action de moyens d'entraînement radial (60), ledit porte-moule ébaucheur pouvant se déplacer d'une position étendue vers l'extérieur, lorsqu'il est aligné avec le dispositif d'approvisionnement (50) pour recevoir une goutte, à une position de retrait lorsqu'il est aligné avec le poinçon-ébaucheur.

9. Machine selon l'une quelconque des revendications 1 et 8, **caractérisée en ce que** ledit porte-moule ébaucheur (48) peut se déplacer verticalement sous l'action de moyens d'entraînement vertical (66), ledit porte-moule ébaucheur pouvant se déplacer d'une position de formage élevée, dans laquelle il reçoit le poinçon-ébaucheur (54) pour mouler la goutte en une forme de paraison, à une position abaissée dans laquelle la paraison est découverte et suspendue à la bague de col (56) par son bord (Pb).
